# EUROPEAN PATENT SPECIFICATION

(11) **EP 3 740 699 B1**
(45) Date of publication and mention of the grant of the patent: **14.02.2024**
(21) Application number: 19700605.9
(22) Date of filing: 18.01.2019
(51) Int. Cl.: F16F 15/06, F16F 7/116, E04B 1/98, G10K 11/16

(54) **LOW-FREQUENCY AND BROAD-SPECTRUM VIBRO-ACOUSTIC INSULATING MODULE DEVICE, AND RELATIVE PERIODIC STRUCTURE**
NIEDERFREQUENTE UND BREITBANDIGE VIBROAKUSTISCHE ISOLIERMODULANORDNUNG UND ZUGEHÖRIGE PERIODISCHE STRUKTUR
DISPOSITIF DE MODULE D'ISOLATION VIBRO-ACOUSTIQUE À BASSE FRÉQUENCE ET LARGE SPECTRE, ET STRUCTURE PÉRIODIQUE RELATIVE

(30) Priority: 19.01.2018 IT 201800001510
(43) Date of publication of application: 25.11.2020
(73) Proprietor: Phononic Vibes S.r.l., 20158 Milano (IT)
(72) Inventor: D'ALESSANDRO, Luca, 66100 Chieti (IT); ZEGA, Valentina, 63821 Porto Sant'Elpidio (FM) (IT); RIVA, Emanuele, 23018 Talamona (SO) (IT); ARDITO, Raffaele, 20154 Milano (IT); BRAGHIN, Francesco, 21100 Varese (IT); CORIGLIANO, Alberto, 20159 Milano (IT)
(74) Representative: Botti & Ferrari S.p.A.
(86) International application number: PCT/EP2019/051205
(87) International publication number: WO 2019/141794

(56) References cited:
- WO-A1-2015/196111
- WO-A2-2012/151472
- CN-A- 106 228 969
- US-A1- 2014 027 199
- BARAVELLI EMANUELE ET AL: "Internally resonating lattices for bandgap generation and low-frequency vibration control", JOURNAL OF SOUND AND VIBRATION, vol. 332, no. 25, 12 September 2013 (2013-09-12), pages 6562-6579, XP028726372, ISSN: 0022-460X, DOI: 10.1016/J.JSV.2013.08.014

## Description

### Technical Field

The present invention relates to a vibro-acoustic insulating module device and a relative vibro-acoustic insulating periodic structure.

In general, the present invention applies to the field of vibrations damping and to the field of control of the propagation of mechanical and acoustic waves and vibrations.

### Background Art

There exist devices configured for limiting the propagation of vibrations generated by machineries and systems, which serve as insulation for the adjacent areas. Such machineries and systems, in fact, constitute sources of mechanical or acoustic vibrations, the propagation of which results to be undesirable in the environment.

By the term machineries is intended, without limitation: industrial machines of any type and size (turbines, windmills, etc.), trains of any type and size, working tools for construction sites.

The prior art comprises some solutions for vibration insulation that refer to three-dimensional periodic structures.

An example of known solution is provided by the publication *"*Modeling and experimental verification of an ultra-wide bandgap in 3D phononic crystal"; D'Alessandro, L.; Belloni, E.; Ardito, R.; Corigliano, A.; Braghin, F.; Applied Physics Letters, Volume 109, Issue 22, id.221907 (November 2016), which relates to a three-dimensional phononic crystal, composed by a single material and capable of insulating broad-spectrum and high-frequency vibrations (4.0-19.0 kHz). However, the solution proposed by the publication mentioned above results to be inadequate for industrial uses, due to the dimension constraints of the module and of the frequencies spectrum, which are not of interest in the case of vibrations generated by machineries and plants.

A further example of known solution is provided by the publication *"*Design and Fabrication Challenges for Millimeter-Scale Three-Dimensional Phononic Crystals"; F. Lucklum, M. J. Vellekoop; Crystals, 11, 348 2017 (November 2017), which relates to a three-dimensional phononic structure constituted by centered-face spheres, connected by a central structure with beams positioned along three axes orthogonal to each other, with the ability to insulate high-frequency vibrations (above the 100 kHz). As well, the solution proposed by the above-mentioned publication results to be inadequate for industrial uses, due to the dimension constraints of the module and of the frequencies spectrums, which are not of interest in the case of vibrations generated by machineries and plants.

A further example of known solution is provided by the publication *"*Mechanical low-frequency filter via modes separation in 3D periodic structures"; L. D'Alessandro, E. Belloni, R. Ardito, F. Braghin, A. Corigliano; Appl. Phys. Lett. (December 2017), which relates to a three-dimensional periodic elastic structure, comprising semispherical masses connected by a cage-like central structure, capable of insulating broad-spectrum and high-frequency vibrations (2-20 kHz). However, the solution proposed by the above-mentioned publication results to be inadequate for industrial uses, due to the dimension constraints of the module and of the frequencies spectrum, which are not of interest in the case of vibrations generated by machineries and plants.

Document US 7,910,193 B2 by Zheng-Dong Ma relates to a structure of the auxetic type constituted by unitary cells, pyramid- shaped. A structure of the auxetic type provides for a negative Poisson's ratio, so when stressed and compressed in a direction, it contracts in the other directions orthogonal to it (while structures of the non-auxetic type would expand in these other directions). However, the structure known by US 7,910,193 B2 does not represent a solution suitable for vibro-acoustic insulation.

Document WO2015196111 A1 relates to a microarchitectured material having a plurality of interconnected unit cells in 2D or 3D configurations; permanent interconnections to adjacent unit cells include mechanical output structures driven by mechanical actuators.

The prior art solutions, even if based on repetitions in the three dimensions of vibro-acoustic insulating module devices, do not guarantee efficient insulation for each direction of the incident wave/vibration, being robust in the preferred frequency interval between 0-1000 Hz for applications of vibration insulation of civil and industrial character, or in the preferred frequency interval between 10-4000 Hz for acoustic insulation applications.

Furthermore, the solutions of the background art present vibro-acoustic insulating module devices which are complex to manufacture and unsuitable for applications of industrial type, in particular on large scale.

### Summary of Invention

An object of the present invention is that of solving inconveniences of the background art.

A particular object of the present invention is that of presenting a device for vibro-acoustic insulation or waves, mechanical or acoustic, which is efficient in a spectrum of frequencies that is wide, in particular up to 1000 or up to 4000 Hz.

A further particular object of the present invention is that of presenting a device that allows to control the propagation of vibrations, both elastic and acoustic, providing three-dimensional insulation.

A further particular object of the present invention is that of presenting a device that is efficient in contexts of civil and industrial type, and whose manufacturing is not excessively expensive.

These and other objects are achieved by a vibro-acoustic insulating module device and by a relative periodic structure, according to the features of the annexed claims that form an integral part of the present disclosure.

An idea at the basis of the present invention is to provide a vibro-acoustic insulating module device according to the features of claim 1.

The module device according to the present invention represents a three-dimensional topology of a base module for a modular structure, which behaves as an insulator or filter for the propagation of vibro-acoustic waves. The module device according to the present invention, therefore, allows to realize an efficient structure for the insulation of vibrations or waves, mechanical or acoustic, of broad spectrum.

Advantageously, such module device can be employed in a periodic structure for the vibro-acoustic insulation of waves or vibrations generated by machineries and plants, traffic on infrastructures, construction sites and noise sources in general; the modular repetition of the device can be selected according to the application, providing a three-dimensional insulation.

Further, the module device according to the present invention results to be efficient in contexts of civil and industrial type as it requires an inexpensive manufacturing. In fact, advantageously, the module device according to the present invention can be manufactured of materials of common use in the fields of civil engineering and mechanical engineering, such as steel and concrete. In that sense, the module device according to the present invention is suitable for supporting loads and stresses encountered in the industrial field. Alternatively, the module device according to the present invention can be realized in other materials of common use, such as plastic, and suitable for the specific application of insulation from vibrations, mechanical or acoustic.

The module device according to the invention, therefore, represents an alternative that is more valid and also more efficient with respect to the known insulating devices.

Preferably, each of the stiffness elements mechanically interconnects two respective mass elements adjacent to each other, so that each mass element is respectively connected to the four mass elements adjacent to it.

In a preferred embodiment, each of the mass elements comprises four inner faces substantially arranged as a pyramid and facing towards respective further inner faces of the four adjacent mass elements; each of the stiffness elements comprises two elongated elements and an intermediate bridge element, being substantially U-shaped, and each of the four inner faces comprises a respective anchor element configured for housing one of the elongated elements, which is arranged in a direction parallel to each of the four inner faces.

Preferably, the elongated elements are inserted head-on in the anchor elements, which are perpendicular with respect to the inner face wherein they are provided.

Advantageously, the module device according to the present invention exhibits auxetic behavior, that is, it has a negative Poisson's ratio considered for the whole module device.

In another preferred embodiment, the stiffness elements are substantially L-shaped or closed-ring-shaped.

Preferably, the mass elements comprise grooves or channels within which the anchor elements are located; advantageously, the anchor elements occupy a limited portion of the channels, and in this way the mass of the mass elements is maximized, and at the same time the stiffness of the stiffness elements is minimized.

According to a further aspect, the present invention relates to a vibro-acoustic insulating periodic structure, comprising a plurality of module devices juxtaposed to each other with external interface's continuity, to define a three-dimensional structure.

Further features and advantages will become more apparent from the detailed description made below of preferred non-limiting embodiments of the present intention, and from the dependent claims that depict preferred and particularly advantageous embodiments of the invention.

### Brief Description of Drawings

The invention is illustrated with reference to the following figures, provided as non-limiting examples, wherein:
- Figure 1 illustrates a first embodiment of a vibro-acoustic insulation module device according to the present invention.
- Figure 2 illustrates a mass element of the module device of Figure 1.
- Figure 3 illustrates the stiffness elements of the module device of Figure 1.
- Figure 4 illustrates the assembly of a mass element and of a stiffness element of the module device of Figure 1.
- Figure 5 illustrates a section view of the module device of Figure 1, wherein the anchor elements are further visible.
- Figure 6 illustrates a second embodiment of a vibro-acoustic insulating module device according to the present invention.
- Figure 7 illustrates a view of the module device of Figure 6, partially disassembled.
- Figure 8 illustrates the stiffness elements of the module device of Figure 6.
- Figure 9 illustrates a third embodiment of a vibro-acoustic insulating module device according to the present invention.
- Figure 10 illustrates a view of the module device of Figure 9, partially disassembled.
- Figure 11 illustrates a fourth embodiment of a vibro-acoustic insulating module device according to the present invention.
- Figure 12 illustrates a view of the module device of Figure 11, partially disassembled.
- Figure 13 illustrates the stiffness elements of the module device of Figure 11.
- Figure 14 illustrates the anchor elements of the module device of Figure 11.
- Figure 15 illustrates a partially disassembled view of a variant of the module device of Figure 11.
- Figure 16 illustrates an example of realization of a vibro-acoustic insulating periodic structure according to the present invention.

In the different figures, analogous elements will be identified by analogous reference numbers.

### Detailed Description

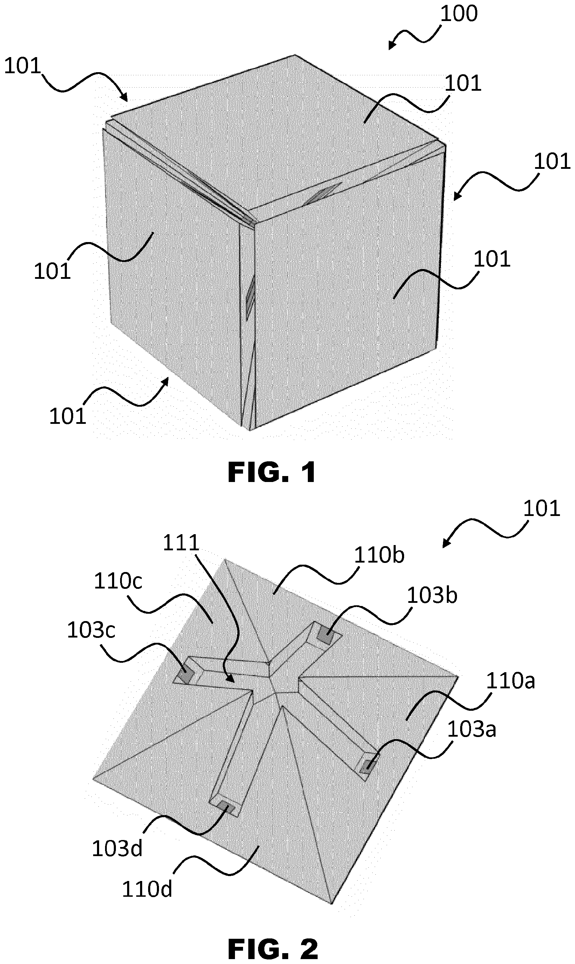

Figure 1 illustrates a first embodiment of a vibro-acoustic insulating module device 100.

Such module device 100 comprises six mass elements 101, adjacent to each other. Above all, the presence of gaps between the mass elements 101 is noticed, which result not joined to each other.

By "adjacent and not joined" is intended that the mass elements are juxtaposed and near to each other, but are not realized in a single piece and there is discontinuity of material between mass elements adjacent to each other.

The six mass elements 101 define a substantially cubic structure, having preferably six respective plane faces, facing towards the outside of the module device 100.

The module device 100, as it will be further described, is capable of insulating from broad spectrum vibrations and in particular at low frequency, mechanical and acoustic, for example respectively between 0 Hz and 1000 Hz or between 10 Hz and 4000 Hz.

As it will be further described, the module device 100 can be inserted in a relative insulating periodic structure, which comprises a plurality of module devices juxtaposed to each other, with external interface's continuity defined by the external plane faces of the six mass elements 101. An advantage of the present invention is that the insulating periodic structure is realized in any number of module devices.

The module device 100 is therefore capable of contributing to a periodic structure for insulating from vibrations and waves, acoustic or mechanical, in particular at low frequency and with broad spectrum, which propagate in a three-dimensional manner.

The module device 100 has preferably dimensions that vary from a few centimeters to about 1 m or more, depending on the insulation characteristics sought.

The mass elements 101 can be realized in materials typically used in civil engineering and mechanical engineering, such as metals, alloys, wood, concrete, plastics, rubber or the like. The mass elements 101 can also be realized through the "additive manufacturing" techniques or 3D printing.

In an alternative embodiment, the mass elements could define advantageously a parallelepiped structure, rather than cubic, anyway easily juxtaposable to define a periodic structure.

Figure 2 illustrates a mass element 101 of the module device 100.

The mass element 101 is substantially pyramid-shaped. In particular, the mass element 101 comprises four inner faces 110a, 110b, 110c and 110d substantially arranged as a pyramid and that, when the mass element 101 is juxtaposed to the other mass elements 101 in the module device 100, are facing towards respective further inner faces of the four adjacent mass elements 101. The four inner faces 110a, 110b, 110c and 110d are below indicated as under reference 110 only, as well.

The mass element 101 comprises four anchor elements 103a, 103b, 103c, 103d, below indicated as under reference 103 only, as well.

Such anchor elements 103 are configured for housing and constraining respective stiffness elements, which will be described in greater detail below.

In general, the mass elements according to the present invention are substantially pyramid-shaped or truncated pyramid-shaped or cone-shaped or truncated cone-shaped, so that the bases of the same substantially define the external faces of the module device 100, while each mass element develops towards the inside of the device, juxtaposing to the adjacent elements, constituting a compact structure.

In general, it is advantageous that the mass elements occupy as much space as possible inside of the module device, without overlapping or touching each other. It is therefore possible to use other geometries for the masses, which comply with such features.

Preferably, the mass elements are alike, also for simplifying the industrial production and the assembly of the device 100.

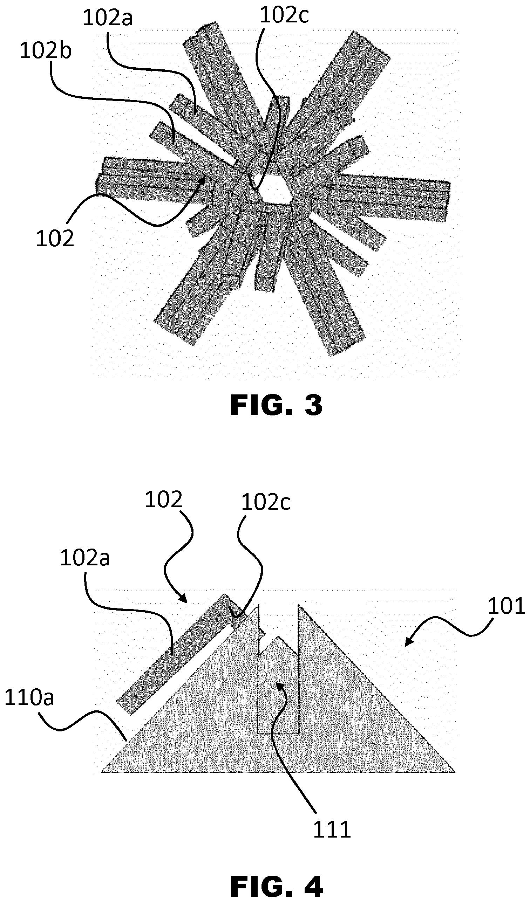

Figure 3 illustrates the stiffness elements 102 of the module device 100.

The structure of the module device 100 is preferably realized through the presence of twelve stiffness elements, collectively indicated by reference 102, arranged inside of the module device 100.

The twelve stiffness elements 102 are configured for mechanically interconnecting the six mass elements 101 and constitute the structure of the module device 100. In other words, the stiffness elements 102 are suitable for guaranteeing structural cohesion to the mass elements 101.

Preferably, for applications of mechanical vibro-acoustic insulation, the stiffness elements are realized in metallic material, so as to guarantee good properties of insulation from vibrations, and at the same time, the possibility of supporting loads, even heavy ones.

The stiffness elements 102 are characterized each by two elongated elements 102a and 102b, and an intermediate bridge element 102c. Therefore, each of the stiffness elements 102 is substantially U-shaped.

In the embodiment of the stiffness elements 102, a square cross-section is provided for, but other cross-sections (for example circular, elliptical, rectangular, etc.) could be used.

In general, the twelve stiffness elements are separated from each other and not joined to each other. The twelve stiffness elements do not intersect with each other. Further, the twelve stiffness elements are preferably alike. In alternative embodiments, a greater number of stiffness elements could be employed, preferably a multiple of twelve, as it will be clearer below.

The stiffness elements 102 are arranged in groups of four on respective three planes orthogonal to each other, to form a three-dimensional structure, with a preferably cubic symmetry as described.

Figure 4 illustrates a stiffness element 102 connected to a mass element 101 through the anchor elements 103 (not visible) of the module device 100.

The anchor elements 103 are configured for housing each one a respective stiffness element 102, in such a way that the elongated element 102a is arranged in a direction parallel to each of the four inner faces, in the example the inner face 110a.

In the preferred embodiment, the intermediate bridge element 102c faces towards the inside of the module device 100, that is, towards the tip of the pyramid defined by the four inner faces of the mass element 101.

Preferably, each mass element 101 comprises channels 111, derived from each of the four inner faces 110a, 110b, 110c, 110d. Such channels 111 are configured for housing one respective of the elongated elements 102a or 102b of the stiffness element 102.

In such a way, thanks to the channels 111 it is possible to render the module device 100 more compact, at the same time conferring enough length to the elastic elements 102 to minimize the stiffness thereof and therefore optimize the function of vibro-acoustic insulation.

The anchor elements 103 are configured for providing a constraint for a respective end of the stiffness element 102.

In particular, the anchor elements 103 preferably provide a fixed constraint for the respective end of the stiffness element 102.

Alternatively, the anchor elements 103 can provide an at least partially elastically yielding constraint, for the respective end of the stiffness element 102; in such a way, by realizing a looser constraint, in a similar manner to a hinge with limited angular stroke, it is possible to further lower the insulating frequencies of the module device.

In general, the mass elements 101, the stiffness elements 102 and the anchor elements 103 are arranged according to three symmetry planes (in particular, cubic symmetric) inside the module device 100. The three-dimensionality of the structure of the module device 100 allows the softening of vibrations in the three-dimensional field, with better vibration insulating characteristics.

In general, the module device comprises masses arranged along the main directions of propagation of the vibrations, preferably using masses and stiffnesses which are respectively alike.

The reciprocal constraint between the mass elements through the stiffness elements connected to the anchor elements contributes to realize a compact and efficient device for insulating the vibrations.

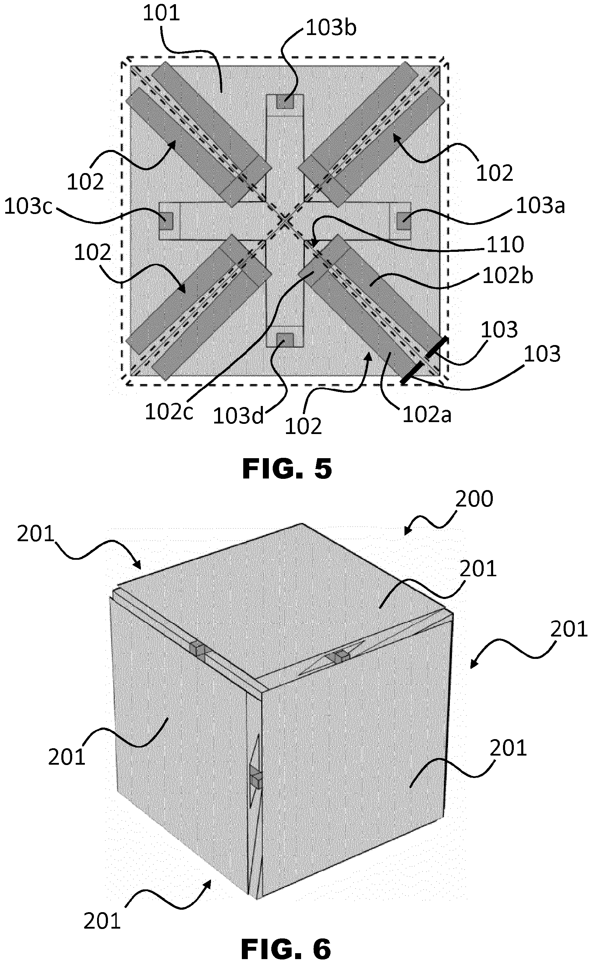

Figure 5 illustrates a section view of the module device 100, wherein the anchor elements 103 are further visible.

Some mass elements 101 are represented by a dotted line, to allow the vision of an underlying mass element 101 and above all, of four stiffness elements 102, coplanar to each other and arranged on one of the orthogonal planes of the module device 100.

The elongated elements 102a and 102b of the stiffness element 102 are inserted head-on in the anchor elements 103, assuming the configuration represented in Figure 5. In particular, the anchor elements 103 are respectively substantially perpendicular to the inner face 110 of the mass element 101 in which they are found.

Each of the stiffness elements 102 connects respectively the mass element 101 to the four mass elements 101 adjacent to it. This symmetry is verified for the whole module device, so that each mass element 101 is connected directly to the mass elements 101 adjacent to it, and only indirectly connected to the mass element 101 opposite to it in the structure of the module device 100.

In other words, each of the stiffness elements 102 mechanically interconnects two respective mass elements adjacent to each other, constituting the structure of the module device 100.

In particular, the constraint provided by the anchor elements 103 allows the elastic elements 102 to bend and wind when stressed by the movement of the mass elements 101, in particular put in movement by the vibrations or waves acting on the module device 100.

In particular, when the module device 100 is stressed by compression along a main direction, acting along the direction encompassed by two mass elements 101 opposite one another, the four mass elements 101, laterally adjacent, tend to contract towards the inside of the module device 100.

In fact, the stiffness elements 102 are configured in such a way as to distribute a compression stress acting on one of the mass elements 101, respectively on the adjacent mass elements 101, attracting them towards the center of the module device 100.

In other words, the module device 100 exhibits a behavior of the "auxetic" type, that is, having a Poisson's ratio that is negative.

Different configurations could be studied for the module device according to the present invention, to have a null or positive Poisson's ratio, as it is possible to appreciate in reference to the embodiments illustrated below.

In general, the auxetic structure of the module device 100 allows to not transmit stresses, acting in a main direction, also on the lateral plane; when the module device 100 is inserted in a periodic structure, the auxetic characteristic allows to use the module device 100 also as impact absorber, without affecting the structural stability.

In such sense, each of the module devices 100, when stressed by an impact, is attracted towards the stress point, so that the structure has the capability to efficiently absorb impacts, also of relevant magnitude.

Further, the auxetic structure of the module device 100 allows to realize a tunable mechanical filter, of which the frequency response can be modified through the application of an external fixed load, exploiting the negative Poisson's ratio of the module.

The specific characteristics of the elements of the module device according to the present invention can be defined as project variables, according to the materials used and to the desired response in frequency.

It is possible, when necessary, to insert further constraining elements between the anchor elements and the mass elements. Preferably, when possible, the anchor elements are realized in the same material of the mass elements or of the stiffness elements.

Also, in the following alternative embodiments of the module device, when not otherwise indicated explicitly, the features already described with reference to the embodiment of the module device 100 are applicable.

Figure 6 illustrates a second embodiment of a vibro-acoustic insulating module device 200 according to the present invention.

The six mass elements 201, respectively adjacent and not joined, define a module structure, with cubic symmetry according to what has already been described.

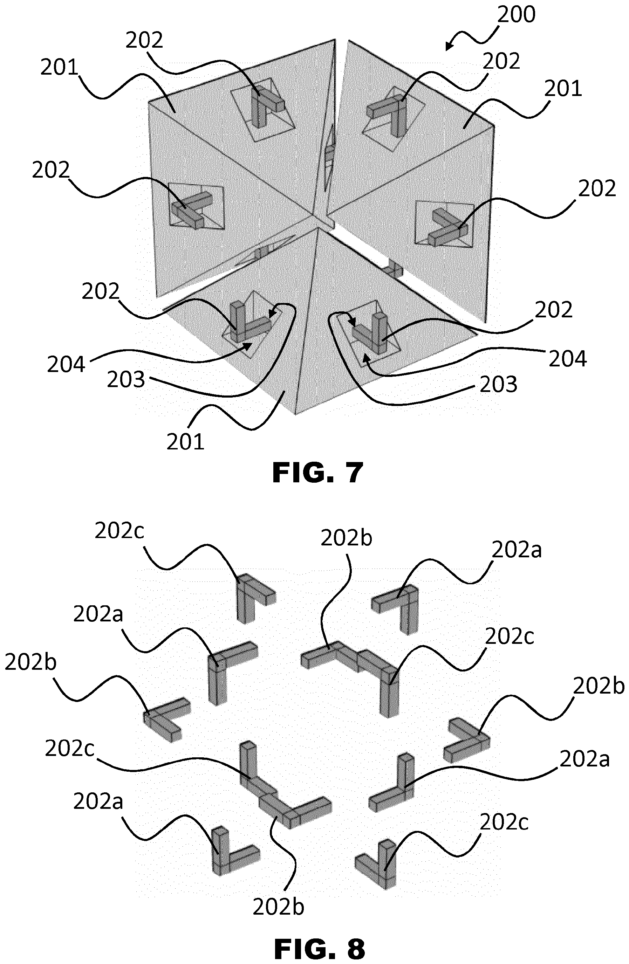

Figure 7 illustrates a view of the partially disassembled module device 200, from which, to render the inside thereof visible, three of the six mass elements 201 have been removed.

The module device 200 comprises twelve stiffness elements 202, of which some are omitted in Figure 7 for improved visibility. Preferably, each of the stiffness elements 202 is substantially L-shaped. Such stiffness elements 202 are configured for mechanically interconnecting the six mass elements 201.

Each mass element 201 comprises four anchor elements 203, which house four respective stiffness elements 202. In particular, each anchor element 203 provides a constraint for a respective end of one of the stiffness elements 202.

In particular, the anchor elements 203 preferably provide a fixed constraint for the respective end of the stiffness element 202. Alternatively, the anchor elements 203 can provide an at least partially elastically yielding constraint, for the respective end of the stiffness element 202, as already described.

In such a way, each of the stiffness elements 202, as it can be deduced by considering the gaps between the mass elements 201 in Figure 7, connects respectively the mass element 201 to the four mass elements 201 adjacent to it.

In particular, each of the stiffness elements 202 mechanically interconnects two respective mass elements 201 adjacent to each other.

The anchor elements 203 are configured for mainly bend-stressing, and preferably also torsion-stressing, the stiffness elements 202 under the action of the mass elements 201.

Preferably, each mass element 201 comprises respective grooves 204 within which the anchor elements 203 and the ends of the stiffness elements 202 are housed. In such a way, thanks to the grooves 204, it is possible to render the module device 200 more compact, at the same time conferring enough length to the elastic elements 202 to minimize the stiffness thereof and therefore optimize the vibro-acoustic insulating function.

Figure 8 illustrates the twelve stiffness elements, indicated collectively by reference 202, of the module device 200.

The stiffness elements 202 are not joined to each other and separated from each other, in such a way as to structurally interact with each other only when anchored to the mass elements 201. In particular, the twelve stiffness elements 202 do not intersect with each other.

Preferably, the stiffness elements 202 are arranged in three groups 202a, 202b and 202c of four stiffness elements each one. The three groups 202a, 202b and 202c are arranged on three planes orthogonal to each other, in particular on symmetry planes of the module device 200.

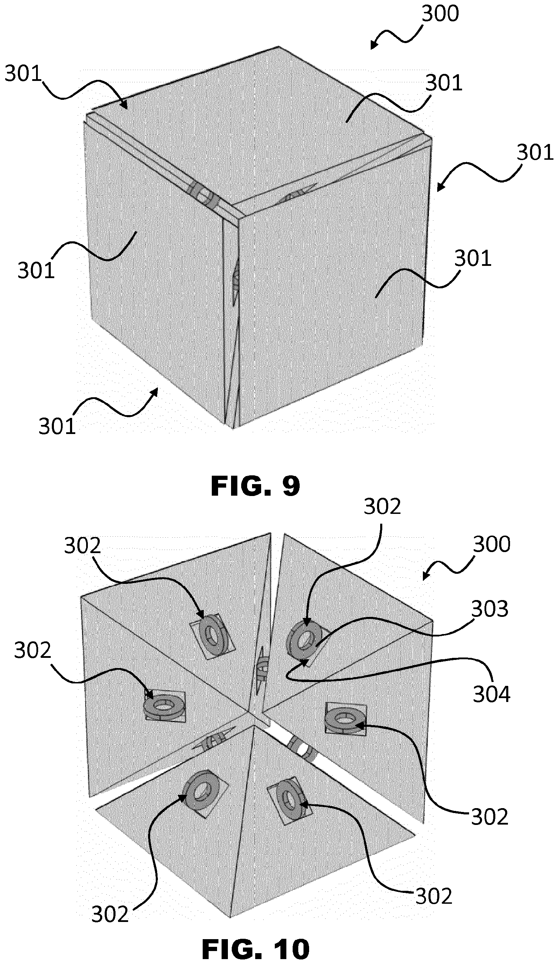

Figure 9 illustrates a third embodiment of a vibro-acoustic insulating module device 300 according to the present invention.

The six mass elements 301, respectively adjacent and not joined, define a module structure, with cubic symmetry according to what has been described.

Figure 10 illustrates a view of the partially disassembled module device 300, to which, to render the inside thereof visible, three of the six mass elements 301 have been removed.

The module device 300 comprises twelve stiffness elements 302, of which some have been omitted in Figure 10 for improved visibility. Preferably, each of the stiffness elements 302 is substantially closed-ring-shaped. Such stiffness elements 302 are configured for mechanically interconnecting the six mass elements 301.

Each mass element 301 comprises four anchor elements 303, which house four respective stiffness elements 302. In particular, each anchor element 303 provides a constraint for one respective of the stiffness elements 302 inserted from the lateral edge of the closed ring.

In particular, the anchor elements 303 preferably provide a fixed constraint or an elastically yielding constraint, for the respective ends of the stiffness element 302, as already described.

The stiffness elements 302 of a mass element 301 connect it respectively to the four mass elements 301 adjacent to it; in particular, each of the stiffness elements 302 mechanically interconnects two respective mass elements 301 adjacent to each other.

Also, the anchor elements 303 are configured for mainly bend-stressing, and preferably also torsion-stressing, the stiffness elements 302 under the action of the mass elements 301.

Preferably, each mass element 301 comprises respective grooves 304 within which the anchor elements 303 are housed.

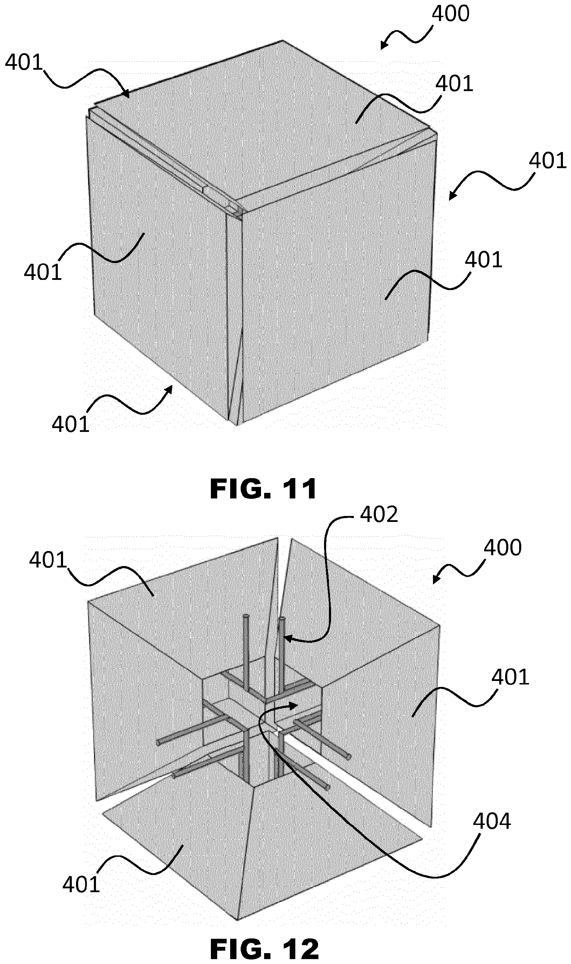

Figure 11 illustrates a fourth embodiment of a vibro-acoustic insulating module device 400 according to the present invention.

The six mass elements 401, respectively adjacent and not joined, define a module structure, with cubic symmetry according to what has already been described.

Figure 12 illustrates a view of the partially disassembled module device 400, to which, to render the inside thereof visible, three of the six mass elements 401 have been removed.

The module device 400 comprises twelve stiffness elements 402, of which some have been omitted in Figure 12 for improved visibility. Preferably, each of the stiffness elements 402 is substantially L-shaped, with round cross-section. Such stiffness elements 402 are configured for mechanically interconnecting the six mass elements 401.

Each mass element 401 comprises four anchor elements 403 (not visible in Figure 12, as they are arranged more internally in the mass elements) that house four respective stiffness elements 402. Preferably, each anchor element 403 provides a fixed constraint or an elastically yielding constraint for a respective end of the stiffness elements 402.

The stiffness elements 402 of a mass element 401 connect it respectively to the four mass elements 401 adjacent to it; in particular, each of the stiffness elements 402 mechanically interconnects two respective mass elements 401 adjacent to each other.

Each mass element 401 comprises a respective groove 404 within which the anchor elements 403 and the stiffness elements 402 are housed. Such groove 404 is realized on the tip of the pyramid defined by the inner faces of the mass element 401.

In such sense, the embodiment of the module device 400 results to have an efficient and at the same time simple structure, requiring a single zone for each mass element 401 dedicated to the groove 404, and using stiffness elements 402 of simple manufacturing, for example L-shaped steel reinforcing bars.

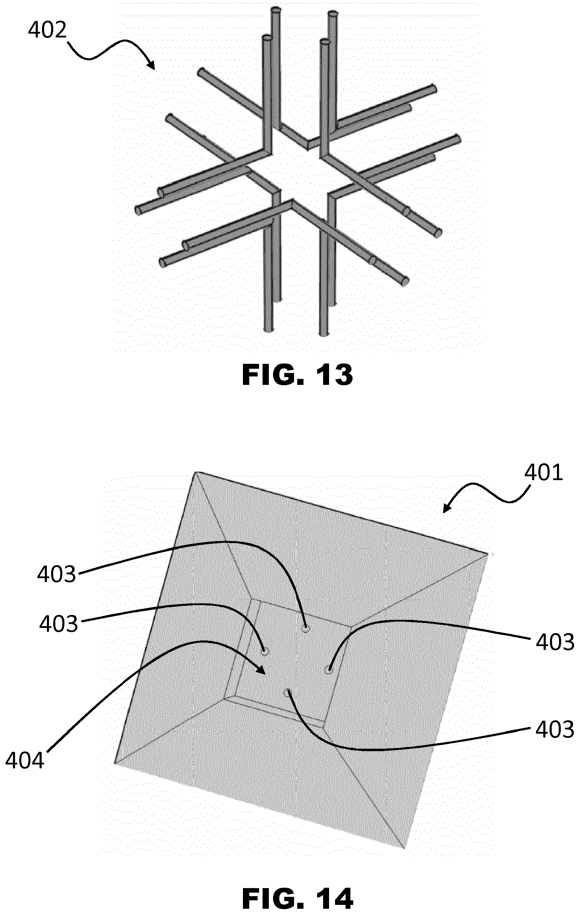

Figure 13 illustrates the twelve stiffness elements, indicated collectively by reference 402 of the module device 400.

The stiffness elements 402 are joined to each other and separated from each other, in such a way as to structurally interact with each other only when anchored to the mass elements 401. In particular, the stiffness elements 402 are arranged in three groups of four stiffness elements each. The three groups are arranged on three planes orthogonal to each other, in particular on symmetry planes of the module device 400.

Figure 14 illustrates the mass element 401, in which the anchor elements 403 housed in the respective groove 404 are visible.

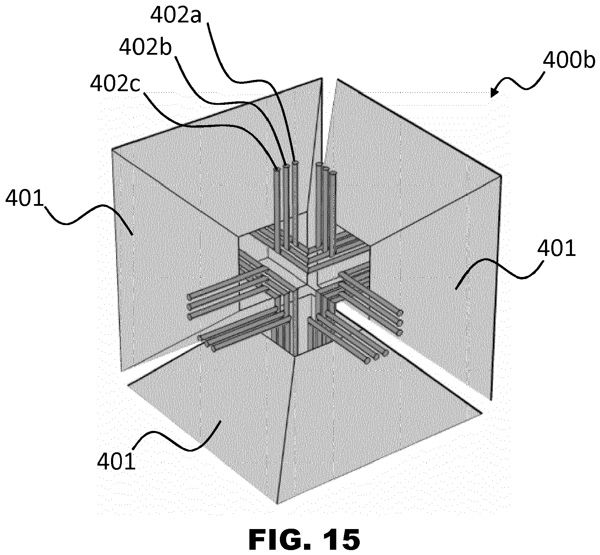

Figure 15 illustrates a partially disassembled view of a module device 400b, which represents a variant of the module device 400.

In such variant, each stiffness element 402 is substituted by a plurality of stiffness elements 402a, 402b, and 402c, which develop along trajectories parallel to each other.

As previously described, the stiffness elements 402a, 402b and 402c of a mass element 401 connect it respectively to the four mass elements 401 adjacent to it; in particular, each of the stiffness elements 402a, 402b and 402c mechanically interconnects two respective mass elements 401 adjacent to each other.

In a variant, not represented, it would be possible to connect the stiffness elements 402a, 402b and 402c among them, realizing a frame structure for each one.

The stiffness elements 402a, 402b and 402c, parallel among them, therefore define equivalent stiffness elements; in the example of the module device 400b there are thirty-six stiffness elements that define twelve equivalent stiffness elements.

The number and conformation of the stiffness elements according to the present invention can therefore be better adapted to the needs of each specific application.

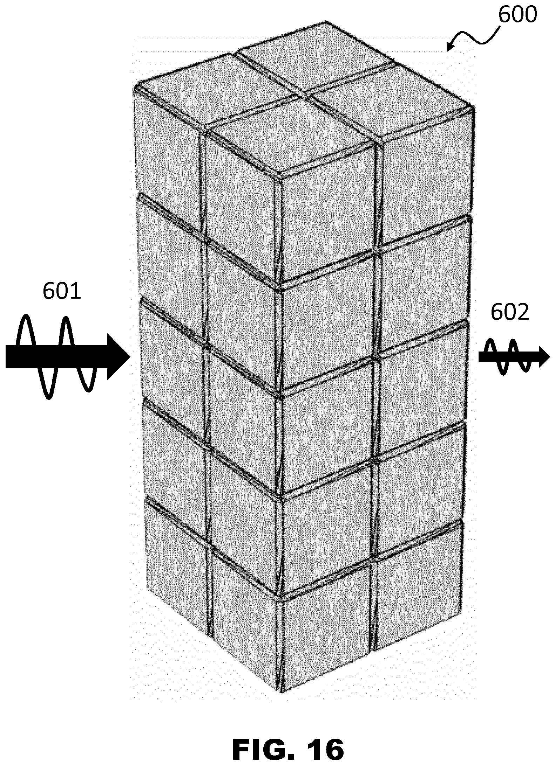

Figure 16 illustrates an exemplary embodiment of an insulating periodic structure 600 according to the present invention.

In particular, the module devices according to the present invention, such as devices 100, 200, 300, 400 described here, are insertable in a relative insulating periodic structure 600.

The insulating periodic structure comprises a plurality of module devices juxtaposed to each other, with external interface's continuity defined by the external plane faces of the six mass elements. In this example, the periodic structure comprises 2x5x2 module devices.

Such periodic structure 600 results to be a three-dimensional structure, of any shape, defined by a plurality of modules juxtaposed to each other. The period structure composed by an appropriate modules configuration is therefore more efficient for insulating from the vibrations of a machinery adjacent to it or near it.

The vibrations 601 are insulated by the structure 600, which lets a spectrally reduced fraction 602 filtered from the original vibrations, with softening effect.

### Industrial Applicability

Advantageously, the present invention allows to insulate vibrations or waves, mechanical or acoustic, with broad-spectrum and at low-frequency.

The module device according to the present invention is optimal to constitute a periodic structure of reduced dimensions and characterized by ultra-wide insulated frequency bands for waves anyway oriented in space.

The module device according to the present invention can be composed of a single material or of more materials, all of common use in mechanical and civil engineering, such as metals, alloys, cement-based conglomerates and wood.

These characteristics offer to the structure the mechanical properties of resistance to loads, even for long terms, something which would not be guaranteed by the use of insulating materials such as rubber.

Alternatively, the module device according to the present invention can be composed of one or more materials, such as plastic or rubber, in particular for applications of insulation of vibrations or acoustic waves.

Further, the module device according to the present invention, by exhibiting auxetic behavior with negative Poisson's ratio, results to be suitable also for the use as impact absorber.

Among the applications of the present invention, we can name: public transport on rail, industrial machineries, the increase in the comfort of structures adjacent to subway and tramway lines, the reduction of the risk of malfunctioning of industrial machines adjacent to other vibrant machineries or to railway networks, the reduction of noise pollution, for example due to vibrations in the ground coming from railway lines, or due to noise sources in general.

Further, the module device according to the present invention can be extremely cheap to realize.

Considering the description made here, the skilled in the art will be able to devise further modifications and variants, in order to satisfy contingent and specific needs.

It is clear that, where there are no evident technical incompatibilities for the skilled in the art, the configurations of specific elements described with reference to certain embodiments, may be used in other embodiments described here.

For example, it would be possible to use configurations of the mass elements, of the stiffness elements or of the anchor elements described in a specific embodiment, also in combination with mass elements, stiffness elements or anchor elements described with reference to other embodiments.

The embodiments herein described are therefore to be intended as illustrating but not limiting the invention.

## Claims

1. Vibro-acoustic insulating module device (100; 200; 300; 400), comprising:
six mass elements (101; 201; 301; 401) respectively adjacent, juxtaposed and near to each other but not realized in a single piece and there is discontinuity of material between mass elements (101; 201; 301; 401) adjacent to each other, wherein gaps are present between said mass elements (101; 201; 301; 401) so that said six mass elements (101; 201; 301; 401) are not joined, wherein said mass elements (101; 201; 301; 401) have a substantially pyramid-shape or substantially truncated pyramid-shape or substantially cone-shape or substantially truncated cone-shape, defining a substantially cubic or parallelepiped structure of said module device (100; 200; 300; 400), said mass elements (101; 202; 301; 401) being preferably alike;
at least twelve stiffness elements (102; 202; 302; 402) configured for mechanically interconnecting said six mass elements (101; 201; 301; 401) in said module device (100; 200; 300; 400);
wherein each mass element (101; 201; 301; 401) among said six mass elements (101; 201; 301; 401) comprises at least four anchor elements (103; 203; 303; 403) for respective at least four stiffness elements (102; 202; 302; 402) among said at least twelve stiffness elements (102; 202; 302; 402);
and wherein each of said at least four stiffness elements (102; 202; 302; 402) respectively connects said each mass element (101; 201; 301; 401) to four mass elements (101; 201; 301; 401) of said six mass elements (101; 201; 301; 401), said four mass elements (101; 201; 301; 401) being adjacent to said each mass element (101; 201; 301; 401).

2. Module device according to claim 1, wherein each of said stiffness elements (102; 202; 302; 402) mechanically interconnects two respective mass elements (101; 201; 301; 401) adjacent to each other of said six mass elements (101; 201; 301; 401).

3. Module device according to claim 1 or 2, wherein said at least twelve stiffness elements (102; 202; 302; 402) are arranged at least in three groups of four stiffness elements, on respective three planes orthogonal to each other, in particular on symmetry planes of said module device.

4. Module device according to any one of claims 1 to 3, wherein each of said mass elements (101) comprises four inner faces (110a, 110b, 110c, 110d) substantially arranged as a pyramid and facing towards respective further inner faces of said four adjacent mass elements (101),
wherein each of said stiffness elements (102) comprises two elongated elements (102a, 102b) and an intermediate bridge element (102c), each of said stiffness elements (102) being substantially U-shaped,
wherein each of said four inner faces (110a, 110b, 110c, 110d) comprises a respective anchor element (103a, 103b, 103c, 103d) configured for housing one of said elongated elements (102a, 102b) which is arranged in a direction substantially parallel to said each of said four inner faces (110a, 110b, 110c, 110d).

5. Module device according to claim 4, wherein said intermediate bridge element (102c) faces towards the inside of said module device (100).

6. Module device according to claim 4 or 5, wherein said elongated elements (102a, 102b) are inserted head-on in said anchor elements (103; 103a, 103b, 103c, 103d), said anchor elements (103; 103a, 103b, 103c, 103d) being respectively substantially perpendicular with respect to said each of said four inner faces (110a, 110b, 110c, 110d).

7. Module device according to any one of claims 4 to 6, further comprising channels (111) derived from each of said four inner faces (110a, 110b, 110c, 110d) and configured for housing one respective of said elongated elements (102a, 102b).

8. Module device according to any one of claims 1 to 7, wherein said module device (100) exhibits auxetic behavior, having negative Poisson's ratio.

9. Module device according to any one of claims 1 to 3, wherein each of said stiffness elements (202; 302; 402) is substantially L-shaped or closed-ring-shaped.

10. Module device according to any one of claims 1 to 9, wherein said mass elements (101; 201; 301; 401) comprise grooves (111; 204; 304; 404) within which said anchor elements (103; 203; 303; 403) are located.

11. Module device according to any one of claims 1 to 10, wherein said at least twelve stiffness elements (102; 202; 302; 402) are not joined to each other and are separated from each other.

12. Module device according to any one of claims 1 to 11, comprising a plurality of stiffness elements (402a, 402b, 402c) also parallel to each other defining twelve equivalent stiffness elements.

13. Module device according to any one of claims 1 to 12, wherein each anchor element (103; 203; 303; 403) provides a constraint for a respective end of one of said stiffness elements (102; 202; 302; 402), preferably providing a fixed constraint or an elastically yielding constraint.

14. Module device according to any one of claims 1 to 13, wherein said anchor elements (103; 203; 303; 403) are configured for mainly bend-stressing, and preferably also for torsion-stressing, said stiffness elements (102; 202; 302; 402) under the action of said mass elements (101; 201; 301; 401).

15. Vibro-acoustic insulating periodic structure (600), comprising a plurality of vibro-acoustic insulating module devices juxtaposed to each other with external interface's continuity, so as to define a three-dimensional structure, **characterized in that** at least one vibro-acoustic insulating module device (100; 200; 300; 400) is according any one of claims 1 to 14.

## Patentansprüche

1. Vibroakustische Isoliermodulvorrichtung (100; 200; 300; 400), aufweisend: sechs Masseelemente (101; 201; 301; 401), die jeweils benachbart, nebeneinander und nahe beieinander angeordnet sind, jedoch nicht in einem einzigen Stück ausgeführt sind und eine Materialdiskontinuität zwischen einander benachbarten Masseelementen (101; 201; 301; 401) vorhanden ist, wobei Spalte zwischen den Masseelementen (101; 201; 301; 401) vorhanden sind, so dass die sechs Masseelemente (101; 201; 301; 401) nicht verbunden sind, wobei die Masseelemente (101; 201; 301; 401) im Wesentlichen pyramidenförmig oder im Wesentlichen pyramidenstumpfförmig oder im Wesentlichen kegelförmig oder im Wesentlichen kegelstumpfförmig ausgebildet sind, so dass eine im Wesentlichen kubische oder quaderförmige Struktur der Modulvorrichtung (100; 200; 300; 400) gebildet ist, wobei die Masseelemente (101; 201; 301; 401) vorzugsweise gleich sind;
mindestens zwölf Steifigkeitselemente (102; 202; 302; 402), die zur mechanischen Verbindung der sechs Masseelemente (101; 201; 301; 402) in der Modulvorrichtung (100; 200; 300; 400) ausgebildet sind;
wobei jedes Masseelement (101; 201; 301; 401) der sechs Masseelemente (101; 201; 301; 401) mindestens vier Ankerelemente (103; 203; 303; 403) für jeweils mindestens vier Steifigkeitselemente ( 102; 202; 302; 402) unter den mindestens zwölf Steifigkeitselementen (102; 202; 302; 402) aufweist;
und wobei jedes der mindestens vier Steifigkeitselemente (102; 202; 302; 402) jedes Masseelement (101; 201; 301; 401) jeweils mit vier Masseelementen (101; 201; 301; 401) der sechs Masseelemente (101; 201; 301; 401) verbindet, wobei die vier Masseelemente (101; 201; 301; 401) dem jeweiligen Masseelement (101; 201; 301; 401) benachbart sind.

2. Modulvorrichtung nach Anspruch 1,
wobei jedes der Steifigkeitselemente (102; 202; 302; 402) jeweils zwei benachbarte Masseelemente (101; 201; 301; 401) der sechs Masseelemente (101; 201; 301; 401) mechanisch miteinander verbindet.

3. Modulvorrichtung nach Anspruch 1 oder 2,
wobei die mindestens zwölf Steifigkeitselemente (102; 202; 302; 402) mindestens in drei Gruppen von vier Steifigkeitselementen in jeweiligen drei zueinander orthogonalen Ebenen, insbesondere in Symmetrieebenen der Modulvorrichtung, angeordnet sind.

4. Modulvorrichtung nach einem der Ansprüche 1 bis 3,
wobei jedes der Masseelemente (101) vier Innenflächen (110a, 110b, 110c, 110d) aufweist, die im Wesentlichen als Pyramide angeordnet sind und zu jeweiligen weiteren Innenflächen der vier benachbarten Masseelemente (101) weisen,
wobei jedes der Steifigkeitselemente (102) zwei längliche Elemente (102a, 102b) und ein zwischengeordnetes Brückenelement (102c) aufweist, wobei jedes der Steifigkeitselemente (102) im Wesentlichen U-förmig ist,
wobei jede der vier Innenflächen (110a, 110b, 110c, 110d) ein jeweiliges Ankerelement (103a, 103b, 103c, 103d) aufweist, das zur Aufnahme eines der länglichen Elemente (102a, 102b) ausgebildet ist, das in einer Richtung im Wesentlichen parallel zu jeder der vier Innenflächen (110a, 110b, 110c, 110d) angeordnet ist.

5. Modulvorrichtung nach Anspruch 4,
wobei das zwischengeordnete Brückenelement (102c) zur Innenseite der Modulvorrichtung (100) weist.

6. Modulvorrichtung nach Anspruch 4 oder 5,
wobei die länglichen Elemente (102a, 102b) frontal in die Ankerelemente (103; 103a, 103b, 103c, 103d) eingesetzt sind, wobei die Ankerelemente (103; 103a, 103b, 103c , 103d) jeweils im Wesentlichen rechtwinklig in Bezug auf jede der vier Innenflächen (110a, 110b, 110c, 110d) sind.

7. Modulvorrichtung nach einem der Ansprüche 4 bis 6,
die außerdem Kanäle (111) aufweist, die von jeder der vier Innenflächen (110a, 110b, 110c, 110d) ausgehen und zur Aufnahme jeweils eines der länglichen Elemente (102a, 102b) ausgebildet sind.

8. Modulvorrichtung nach einem der Ansprüche 1 bis 7,
wobei die Modulvorrichtung (100) ein auxetisches Verhalten mit negativem Poisson-Verhältnis zeigt.

9. Modulvorrichtung nach einem der Ansprüche 1 bis 3,
wobei jedes der Steifigkeitselemente (202; 302; 402) im Wesentlichen L-förmig oder geschlossen ringförmig ist.

10. Modulvorrichtung nach einem der Ansprüche 1 bis 9,
wobei die Masseelemente (101; 201; 301; 401) Nuten (111; 204; 304; 404) aufweisen, in denen sich die Ankerelemente (103; 203; 303; 403) befinden.

11. Modulvorrichtung nach einem der Ansprüche 1 bis 10,
wobei die mindestens zwölf Steifigkeitselemente (102; 202; 302; 402) nicht miteinander verbunden sind und voneinander getrennt sind.

12. Modulvorrichtung nach einem der Ansprüche 1 bis 11,
die eine Mehrzahl von Steifigkeitselementen (402a, 402b, 402c) aufweist, die ebenfalls parallel zueinander sind und zwölf äquivalente Steifigkeitselemente bilden.

13. Modulvorrichtung nach einem der Ansprüche 1 bis 12,
wobei jedes Ankerelement (103; 203; 303; 403) eine Begrenzung für ein jeweiliges Ende eines der Steifigkeitselemente (102; 202; 302; 402) bereitstellt, vorzugsweise eine feste Begrenzung oder eine elastisch nachgebende Begrenzung bereitstellt.

14. Modulvorrichtung nach einem der Ansprüche 1 bis 13,
wobei die Ankerelemente (103; 203; 303; 403) hauptsächlich für Biegebeanspruchung und vorzugsweise auch für Torsionsbeanspruchung ausgebildet sind, wobei die Steifigkeitselemente (102; 202; 302; 402) unter der Wirkung der Masseelemente (101; 201; 301; 401) stehen.

15. Vibroakustische isolierende periodische Struktur (600), die eine Mehrzahl von vibroakustischen Isoliermodulvorrichtungen aufweist, die mit Kontinuität der externen Grenzfläche nebeneinander angeordnet sind, um eine dreidimensionale Struktur zu bilden,
**dadurch gekennzeichnet, dass** es sich bei mindestens einer vibroakustischen Isoliermodulvorrichtung (100; 200; 300; 400) um eine nach einem der Ansprüche 1 bis 14 handelt.

## Revendications

1. Dispositif formant module d'isolation vibro-acoustique (100 ; 200 ; 300 ; 400), comprenant :
six éléments de masse (101 ; 201 ; 301 ; 401) respectivement adjacents, juxtaposés et proches les uns des autres mais non réalisés en une seule pièce et il existe une discontinuité de matériau entre les éléments de masse (101 ; 201 ; 301 ; 401) adjacents les uns aux autres, des espaces étant présents entre lesdits éléments de masse (101 ; 201 ; 301 ; 401) de sorte que lesdits six éléments de masse (101 ; 201 ; 301 ; 401) ne sont pas joints, lesdits éléments de masse (101 ; 201 ; 301 ; 401) ayant sensiblement une forme de pyramide ou sensiblement une forme de pyramide tronquée ou sensiblement une forme de cône ou sensiblement une forme de cône tronqué, définissant une structure sensiblement cubique ou parallélépipédique dudit dispositif formant module (100 ; 200 ; 300 ; 400), lesdits éléments de masse (101 ; 202 ; 301 ; 401) étant de préférence identiques ;
au moins douze éléments de rigidité (102 ; 202 ; 302 ; 402) configurés pour interconnecter mécaniquement lesdits six éléments de masse (101 ; 201 ; 301 ; 401) dans ledit dispositif formant module (100 ; 200 ; 300 ; 400) ;
chaque élément de masse (101 ; 201 ; 301 ; 401) parmi lesdits six éléments de masse (101 ; 201 ; 301 ; 401) comprenant au moins quatre éléments d'ancrage (103 ; 203 ; 303 ; 403) pour respectivement au moins quatre éléments de rigidité (102 ; 202 ; 302 ; 402) parmi lesdits au moins douze éléments de rigidité (102 ; 202 ; 302 ; 402) ;
et chacun desdits au moins quatre éléments de rigidité (102 ; 202 ; 302 ; 402) reliant respectivement chaque élément de masse (101 ; 201 ; 301 ; 401) à quatre éléments de masse (101 ; 201 ; 301 ; 401) desdits six éléments de masse (101 ; 201 ; 301 ; 401), lesdits quatre éléments de masse (101 ; 201 ; 301 ; 401) étant adjacents audit élément de masse (101 ; 201 ; 301 ; 401).

2. Dispositif formant module selon la revendication 1, dans lequel chacun desdits éléments de rigidité (102 ; 202 ; 302 ; 402) interconnecte entre eux, mécaniquement, deux éléments de masse respectifs (101 ; 201 ; 301 ; 401) adjacents l'un à l'autre desdits six éléments de masse (101 ; 201 ; 301 ; 401).

3. Dispositif formant module selon la revendication 1 ou la revendication 2, dans lequel lesdits au moins douze éléments de rigidité (102 ; 202 ; 302 ; 402) sont agencés au moins en trois groupes de quatre éléments de rigidité, sur trois plans respectifs orthogonaux entre eux, notamment sur des plans de symétrie dudit dispositif formant module.

4. Dispositif formant module selon l'une quelconque des revendications 1 à 3, dans lequel chacun desdits éléments de masse (101) comprend quatre faces internes (110a, 110b, 110c, 110d) sensiblement agencées en pyramide et tournées vers d'autres faces internes respectives desdits quatre éléments de masse (101) adjacents,
chacun desdits éléments de rigidité (102) comprenant deux éléments allongés (102a, 102b) et un élément de pont intermédiaire (102c), chacun desdits éléments de rigidité (102) étant sensiblement en forme de U,
chacune desdites quatre faces internes (110a, 110b, 110c, 110d) comprenant un élément d'ancrage respectif (103a, 103b, 103c, 103d) configuré pour loger l'un desdits éléments allongés (102a, 102b) qui est agencé dans une direction sensiblement parallèle à chacune desdites quatre faces internes (110a, 110b, 110c, 110d).

5. Dispositif formant module selon la revendication 4, dans lequel ledit élément de pont intermédiaire (102c) est orienté vers l'intérieur dudit dispositif formant module (100).

6. Dispositif formant module selon la revendication 4 ou la revendication 5, dans lequel lesdits éléments allongés (102a, 102b) sont insérés de front dans lesdits éléments d'ancrage (103 ; 103a, 103b, 103c, 103d), lesdits éléments d'ancrage (103 ; 103a, 103b, 103c, 103d) étant respectivement sensiblement perpendiculaires par rapport à chacune desdites quatre faces internes (110a, 110b, 110c, 110d).

7. Dispositif formant module selon l'une quelconque des revendications 4 à 6, comprenant en outre des canaux (111) dérivés de chacune desdites quatre faces internes (110a, 110b, 110c, 110d) et configurés pour loger l'un respectif desdits éléments allongés (102a, 102b).

8. Dispositif formant module selon l'une quelconque des revendications 1 à 7, dans lequel ledit dispositif formant module (100) présente un comportement auxétique, ayant un coefficient de Poisson négatif.

9. Dispositif formant module selon l'une quelconque des revendications 1 à 3, dans lequel chacun desdits éléments de rigidité (202 ; 302 ; 402) est sensiblement en forme de L ou en forme d'anneau fermé.

10. Dispositif formant module selon l'une quelconque des revendications 1 à 9, dans lequel lesdits éléments de masse (101 ; 201 ; 301 ; 401) comprennent des rainures (111 ; 204 ; 304 ; 404) à l'intérieur desquelles lesdits éléments d'ancrage (103 ; 203 ; 303 ; 403) sont situés.

11. Dispositif formant module selon l'une quelconque des revendications 1 à 10, dans lequel lesdits au moins douze éléments de rigidité (102 ; 202 ; 302 ; 402) ne sont pas accolés les uns aux autres et sont séparés les uns des autres.

12. Dispositif formant module selon l'une quelconque des revendications 1 à 11, comprenant une pluralité d'éléments de rigidité (402a, 402b, 402c) également parallèles entre eux définissant douze éléments de rigidité équivalents.

13. Dispositif formant module selon l'une quelconque des revendications 1 à 12, dans lequel chaque élément d'ancrage (103 ; 203 ; 303 ; 403) assure une contrainte pour une extrémité respective de l'un desdits éléments de rigidité (102 ; 202 ; 302 ; 402), fournissant de préférence une contrainte fixe ou une contrainte élastique.

14. Dispositif formant module selon l'une quelconque des revendications 1 à 13, dans lequel lesdits éléments d'ancrage (103 ; 203 ; 303 ; 403) sont configurés pour exercer une contrainte principalement en flexion, et de préférence également pour une contrainte en torsion, sur lesdits éléments de rigidité (102 ; 202 ; 302 ; 402) sous l'action desdits éléments de masse (101 ; 201 ; 301 ; 401).

15. Structure périodique isolante vibro-acoustique (600), comprenant une pluralité de dispositifs formant modules d'isolation vibro-acoustique juxtaposés les uns aux autres avec continuité d'interface externe, de manière à définir une structure tridimensionnelle, **caractérisée en ce qu'**au moins un dispositif formant module d'isolation vibro-acoustique (100 ; 200 ; 300 ; 400) est selon l'une quelconque des revendications 1 à 14.
